# EUROPÄISCHE PATENTSCHRIFT

(11) **EP 2 256 042 B1**
(45) Veröffentlichungstag und Bekanntmachung des Hinweises auf die Patenterteilung: **21.09.2011**
(21) Anmeldenummer: 10004870.1
(22) Anmeldetag: 07.05.2010
(51) Int. Cl.: B65B 31/02, B65B 57/00, B65D 79/02

(54) **Verpackungsmaschine mit Gas-Konzentrations-Messeinrichtung**
Packaging machine with gas concentration measuring device
Machine d'emballage dotée d'un dispositif de mesure de la concentration de gaz

(30) Priorität: 25.05.2009 DE 102009022545
(43) Veröffentlichungstag der Anmeldung: 01.12.2010
(73) Patentinhaber: Multivac Sepp Haggenmüller GmbH & Co. KG, 87787 Wolfertschwenden (DE)
(72) Erfinder: Boekstegers, Hans-Joachim, 82319 Starnberg (DE); Richter, Tobias, 87700 Memmingen (DE)
(74) Vertreter: Grünecker, Kinkeldey, Stockmair & Schwanhäusser Anwaltssozietät

(56) Entgegenhaltungen:
- EP-A1- 0 627 363
- WO-A1-96/02438
- US-A- 5 407 829
- US-A- 5 822 951
- US-A1- 2007 212 789

## Beschreibung

Die vorliegende Erfindung bezieht sich auf eine Verpackungsmaschine gemäß dem Oberbegriff des Anspruchs 1.

Solche Verpackungsmaschinen sind nicht nur aus der Praxis bekannt, sondern beispielsweise auch aus der DE 10 2007 013 698 A1. Sie beruhen auf der Erkenntnis, dass verpackte Produkte besonders lange haltbar sein können, wenn in der Verpackung eine von der Umgebungsluft abweichende, bestimmte Konzentration eines bestimmten Gases (oder mehrerer Gase) vorliegt. Bevor die mit dem Produkt befüllte Verpackung gasdicht verschlossen wird, wird daher dieses Gas oder Gasgemisch in der idealen Konzentration in die Verpackung eingebracht, nachdem oder während die vorher in der Verpackung befindliche Umgebungsluft aus der Verpackung evakuiert wurde.

Für eine möglichst lange Haltbarkeit der Produkte ist es erforderlich, dass der ideale Konzentrationsbereich des Gases oder des Gasgemisches weder unter-, noch überschritten wird. Folglich ist eine regelmäßige Messung der Konzentration des in die Verpackungen eingeführten und enthaltenen Gasgemisches und der Dichtigkeit der Kammer erforderlich. Zu diesem Zweck verfügten herkömmliche Verpackungsmaschinen wie die der US 5,822,951A über einen Gas-Konzentrations-Sensor, der über einen Messgas-Eingang eine Gasprobe aus der zum Begasen verwendeten Kammer der Verpackungsmaschine entnahm und diese Probe auswertete. Der Messwert stellte den Referenzwert für alle in der Kammer enthaltenen Verpackungen dar.

An diesem herkömmlichen Messprinzip gibt es verschiedene Nachteile. Zum einen verzögert sich die Messung, da die Gasprobe über die Messgasleitung zunächst zum Gassensor gelangen muss. Zum anderen sind die Messwerte mit einer Messungenauigkeit behaftet, wenn die Messleitung des Gassensors vor einer erneuten Messung nicht vollständig mit dem Füllgas des neuen Taktes gespült wurde. Darüber hinaus besteht die Gefahr, dass gemeinsam mit der Gasprobe Flüssigkeitsreste oder Verunreinigungen zum Gassensor gelangen, die nicht nur die Messwerte verfälschen, sondern den Gassensor auch dauerhaft beschädigen können.

Die US 2007/0212789 A1 offenbart einen Indikator, der in einer versiegelten Lebensmittelpackung vorgesehen ist und ausgelesen werden kann, um eine bestimmte Gaskonzentration in der versiegelten Packung zu überprüfen.

Aufgabe der vorliegenden Erfindung ist es, mit konstruktiv möglichst einfachen Mitteln die bekannte Verpackungsmaschine dahingehend zu verbessern, dass eine schnelle, zuverlässige Messung der Gas-Konzentration möglich ist.

Diese Aufgabe wird gelöst durch eine Verpackungsmaschine mit den Merkmalen des Anspruchs 1. Vorteilhafte Weiterbildungen der Erfindung sind in den Unteransprüchen angegeben.

Erfingdungsgemäß ist ein Indikator für die Konzentration des Gases vorgesehen, und dieser Indikator ist im Inneren der Kammer, im Inneren einer Verpackung und/oder im Inneren einer Gasleitung angeordnet. Die Messeinrichtung zum Bestimmen der Gas-Konzentration verfügt ihrerseits über einen Messkopf, der den Indikator mittels elektromagnetischer Strahlung auslesen kann.

Ein Vorteil der Erfindung liegt darin, dass keine Gasprobe mehr entnommen werden muss, um die Konzentration des Gases oder eines Gasgemisches zu messen. Statt dessen wird lediglich der Indikator im Inneren der Kammer, im Inneren einer Verpackung und/oder im Inneren einer Gasleitung und damit an einem Ort angeordnet, an dem er mit dem Gas oder Gasgemisch wechselwirken kann. Der Messkopf selbst muss hingegen nicht mehr unmittelbar mit dem zu messenden Gasvolumen in Kontakt treten. Auf diese Weise kann die Messung extrem schnell erfolgen, da das Auslesen des Indikators mit elektromagnetischer Strahlung und damit mit Lichtgeschwindigkeit erfolgt. Das zeitaufwendige Heranführen einer Gasprobe an den Gassensor entfällt. Darüber hinaus sind die Messergebnisse deutlich zuverlässiger, weil sie nicht durch Restgase im Messgaseingang des Gassensors z. B. aus einem vorherigen Arbeitstakt der Verpackungsmaschine verfälscht werden können.

Auf Grund der räumlichen Trennung von Indikator und Messkopf kann die Verpackungsmaschine eine Vorrichtung zum Reinigen des Indikators aufweisen. Auf diese Weise kann sichergestellt werden, dass die Messungen nicht durch am Indikator anhaftende Partikel oder Flüssigkeitsreste verfälscht werden. Die Reinigung des Indikators kann auch in einem sogenannten "clean-in-place" -Verfahren erfolgen, gegebenenfalls zwischen zwei Takten zum Verschließen von Verpackungen.

Prinzipiell könnte Strahlung aus jedem Bereich des elektromagnetischen Spektrums für das Auslesen des Indikators herangezogen werden, so lange der Indikator mit dieser Strahlung wechselwirken kann. Beispielsweise könnte es sich bei der elektromagnetischen Strahlung um UV-Licht, infrarotes Licht, Terahertz-Strahlung, niederfrequente oder hochfrequente Funkwellen handeln. Vorzugsweise wird das Auslesen des Indikators jedoch im sichtbaren bzw. optischen" Spektralbereich erfolgen, da in diesem Bereich eine Vielzahl klein bauender Messköpfe zur Verfügung stehen.

Vorzugsweise ist der Messkopf in der Wand der Kammer oder der Gasleitung angeordnet, ohne jedoch unmittelbar mit dem Inneren der Kammer bzw. der Gasleitung in Kontakt zu sein. Diese Anordnung ermöglicht eine direkte, zuverlässige Messung der Konzentration des Gases bzw. des Gasgemisches, ohne die Gefahr, dass der Messkopf verschmutzt oder beschädigt wird.

Denkbar ist es, dass die Messeinrichtung lediglich den Indikator ausliest. Vorteilhaft ist es jedoch, wenn die Messeinrichtung den Indikator zusätzlich optisch anregt, beispielsweise durch Einstrahlen von Licht auf den Indikator (oder, durch Beaufschlagen des Indikators mit elektromagnetischer Strahlung außerhalb des sichtbaren Bereichs). Durch dieses Anregen des Indikators kann die Empfindlichkeit der Messung deutlich erhöht werden.

Zweckmäßig ist es, wenn der Messkopf zum Messen der Reflektivität, der Transmissivität und/oder Fluoreszenz des Indikators in einem bestimmten Spektralbereich oder bei einer bestimmten Wellenlänge ausgebildet ist. Zu diesem Zweck könnten geeignete Filter vorgesehen sein, die ein Rauschen in der Messung unterdrücken und die Messung damit noch empfindlicher machen.

Denkbar wäre es, dass die Verpackungsmaschine über eine Einrichtung zum Verändern und Einstellen des Spektralbereichs bzw. der Wellenlänge verfügt, bei denen der Messkopf den Indikator ausliest. Die Veränderung des Spektralbereichs bzw. der Wellenlänge könnte automatisch erfolgen, um beispielsweise die Genauigkeit der Messung zu optimieren. Die Veränderung und Einstellung des Spektralbereichs bzw. der Wellenlänge könnte - automatisch oder manuell - auch zu dem Zweck erfolgen, die Konzentration unterschiedlicher Gase oder Gasgemische zu messen, wenn dies bei unterschiedlichen Spektralbereichen bzw. Wellenlängen jeweils besonders gut möglich ist.

In einer Ausführungsvariante der Erfindung ist es möglich, dass die Verpackungsmaschine ein Mittel zum Anbringen eines Indikators in einer Verpackung aufweist. Dies ermöglicht es, die Gas-Konzentration in einer einzelnen Verpackung zu messen, sogar noch nach dem Verschließen der Verpackung und ggf. sogar noch zur Kontrolle der Verpackungen im Lager oder unmittelbar vor dem Verkauf im Handel. Zum Zweck einer Qualitätskontrolle könnten die für jede einzelne Verpackung gemessenen Werte gespeichert werden. Insbesondere bei gesundheitsrelevanten Produkten, beispielsweise medizintechnischen oder pharmazeutischen Produkten, könnte dies vorteilhaft sein, um späteren Haftungsansprüchen wegen einer angeblich falschen Begasung oder Undichtigkeit der Verpackungen entgegentreten zu können.

Zweckmäßig wäre es in diesem Zusammenhang beispielsweise, wenn das Mittel zum Anbringen eines Indikators dazu ausgebildet ist, einen Indikator auf der einem Behälterteil der Verpackung zugewandten Seite einer Verschlussfolie anzubringen, die später mit dem Behälterteil verbunden wird.

Im Folgenden wird ein vorteilhaftes Ausführungsbeispiel der Erfindung anhand einer Zeichnung näher erläutert. Im Einzelnen zeigen:
- Figur 1: eine schematische Seitenansicht einer erfindungsgemäßen Verpackungsma- schine in Form einer Tiefziehverpackungsmaschine,
- Figur 2: ein schematischer Vertikalschnitt durch das Siegelwerkzeug der in Figur 1 gezeigten Verpackungsmaschine in geöffneter Stellung,
- Figur 3: das in Figur 2 gezeigte Siegelwerkzeug in geschlossener Stellung,
- Figur 4: ein zweites Ausführungsbeispiel des in Figuren 2 und 3 gezeigten Siegel- werkzeugs,
- Figur 5a: eine schematische Ansicht der Verschließkammer einer Kammermaschine in geöffneter Stellung, und
- Figur 5b: eine schematische Ansicht der in Figur 5a gezeigten Verschließkammer in geschlossener Stellung,

Gleiche Komponenten werden in den Figuren durchgängig mit gleichen Bezugszeichen versehen.

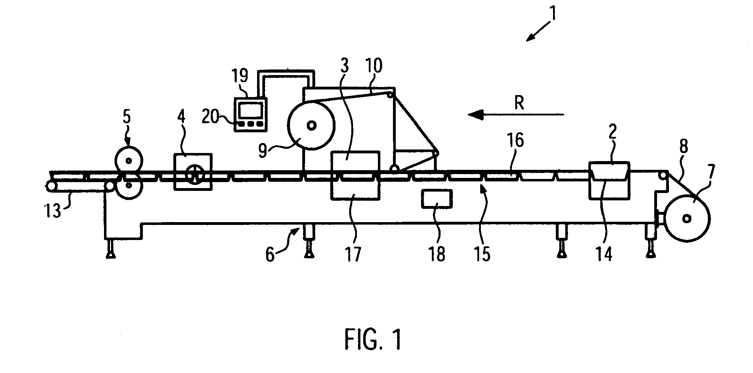

Figur 1 zeigt in schematischer Ansicht eine erfindungsgemäße Verpackungsmaschine 1 in Form einer Tiefziehverpackungsmaschine. Diese Tiefziehverpackungsmaschine 1 weist eine Formstation 2, eine Siegelstation 3, eine Querschneideeinrichtung 4 und eine Längsschneideeinrichtung 5 auf, die in dieser Reihenfolge in eine Arbeitsrichtung R an einem Maschinengestell 6 angeordnet sind. Eingangsseitig befindet sich an dem Maschinengestell 6 eine Zufuhrrolle, von der ein erstes bahnförmiges Material 8 abgezogen wird. Im Bereich der Siegelstation 3 ist ein Materialspeicher 9 vorgesehen, von dem ein zweites bahnförmiges Material 10 als Deckelfolie abgezogen wird. Ausgangsseitig ist an der Verpackungsmaschine eine Abfuhreinrichtung 13 in Form eines Transportbandes vorgesehen, mit der fertige, vereinzelte Verpackungen abtransportiert werden. Ferner weist die Verpackungsmaschine 1 eine nicht dargestellte Vorschubeinrichtung auf, die das erste bahnförmige Material 8 ergreift und in einem Hauptarbeitstakt taktweise in der Arbeitsrichtung R weitertransportiert. Die Vorschubeinrichtung kann zum Beispiel durch seitlich angeordnete Transportketten realisiert sein.

In der dargestellten Ausführungsform ist die Formstation 2 als eine Tiefziehstation ausgebildet, in der in dem ersten bahnförmigen Material 8 durch Tiefziehen Behälter 14 geformt werden. Dabei kann die Formstation 2 derart ausgebildet sein, dass in der Richtung senkrecht zur Arbeitsrichtung R mehrere Behälter nebeneinander gebildet werden. In Arbeitsrichtung R hinter der Formstation 2 ist eine Einlegestrecke 15 vorgesehen, in der die in dem ersten bahnförmigen Material 8 geformten Behälter 14 mit Produkt 16 befüllt werden.

Die Siegelstation 3 verfügt über eine verschließbare Kammer 17, in der die Atmosphäre in den Behälter 14 vor dem Versiegeln zum Beispiel durch Gasspülen mit einem Austauschgas oder mit einem Austausch-Gasgemisch ersetzt werden kann.

Die Querschneideeinrichtung 4 ist als Stanze ausgebildet, die das erste bahnförmige Material 8 und das zweite bahnförmige Material 10 in einer Richtung quer zur Arbeitsrichtung R zwischen benachbarten Behältern 14 durchtrennt. Dabei arbeitet die Querschneideeinrichtung 4 derart, dass das erste bahnförmige Material 8 nicht über die gesamte Breite aufgeteilt wird, sondern zumindest in einem Randbereich nicht durchtrennt wird. Dies ermöglicht einen kontrollierten Weitertransport durch die Vorschubeinrichtung.

Die Längsschneideeinrichtung 5 ist in der dargestellten Ausführungsform als eine Messeranordnung ausgebildet, mit der das erste bahnförmige Material 8 und das zweite bahnförmige Material 10 zwischen benachbarten Behältern 14 und am seitlichen Rand des ersten bahnförmigen Materials 8 durchtrennt werden, so dass hinter der Längsschneideeinrichtung 5 vereinzelte Verpackungen vorliegen.

Die Verpackungsmaschine 1 verfügt ferner über eine Steuerung 18. Sie hat die Aufgabe, die in der Verpackungsmaschine 1 ablaufenden Prozesse zu steuern und zu überwachten. Eine Anzeigevorrichtung 19 mit Bedienelementen 20 dient zum Visualisieren bzw. Beeinflussen der Prozessabläufe in der Verpackungsmaschine 1 für bzw. durch einen Bediener.

Die generelle Arbeitsweise der Verpackungsmaschine 1 wird im Folgenden kurz dargestellt.

Das erste bahnförmige Material 8 wird von der Zufuhrrolle 7 abgezogen und durch die Vorschubeinrichtung in die Formstation 2 transportiert. In der Formstation 2 werden durch Tiefziehen Behälter 14 in dem ersten bahnförmigen Material 8 gebildet. Die Behälter 14 werden zusammen mit dem umgebenden Bereich des ersten bahnförmigen Materials 8 in einem Hauptarbeitstakt zu der Einlegestrecke 15 weitertransportiert, in der sie mit Produkt 16 befüllt werden.

Anschließend werden die befüllten Behälter 14 zusammen mit dem sie umgebenden Bereich des ersten bahnförmigen Materials 8 in dem Hauptarbeitstakt durch die Vorschubeinrichtung in die Siegelstation 3 weitertransportiert. Das zweite bahnförmige Material 10 wird als Deckelfolie nach einem Ansiegelvorgang an das erste bahnförmige Material 8 mit der Vorschubbewegung des ersten bahnförmigen Materials 8 weitertransportiert. Dabei wird das zweite bahnförmige Material 10 von dem Materialspeicher 9 abgezogen. Durch das Ansiegeln der Deckelfolie 10 an die Behälter 14 entstehen verschlossene Verpackungen 21.

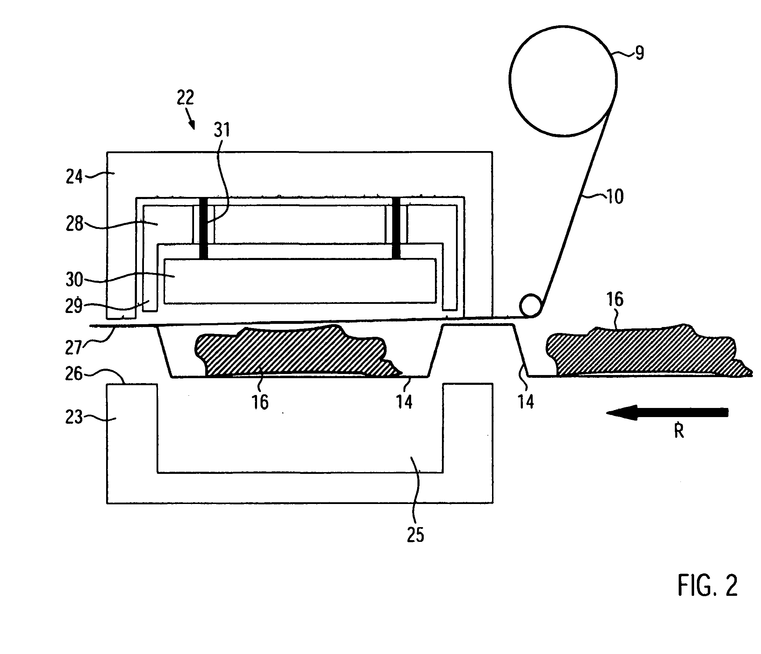

Figur 2 zeigt in schematischer Ansicht einen Vertikalschnitt durch ein Siegelwerkzeug 22 der Siegelstation 3. Das Siegelwerkzeug 22 verfügt über ein Siegelwerkzeugunterteil 23 und ein Siegelwerkzeugoberteil 24. Im Siegelwerkzeugunterteil 23 ist eine Mulde oder Aussparung 25 vorgesehen. In der Aussparung 25 kann ein zu verschließender Behälter 14 angeordnet werden, während der Rand 26 des Siegelwerkzeugunterteils 23 den Rand 27 des Behälters 14 trägt.

Im Inneren des Siegelwerkzeugoberteils 24 befindet sich eine Siegelplatte 28 mit nach unten ragenden Siegelrändern 29. Innerhalb der Siegelplatte 28 liegt eine Produktschutzplatte 30. Die Produktschutzplatte 30 ist kühler als die Siegelplatte 28 und verhindert beim Siegeln eine zu starke Erwärmung des Produkts 16 im Behälter 14. Zu diesem Zweck können Kühlwasserleitungen 31 zum Kühlen der Produktschutzplatte 30 vorgesehen sein.

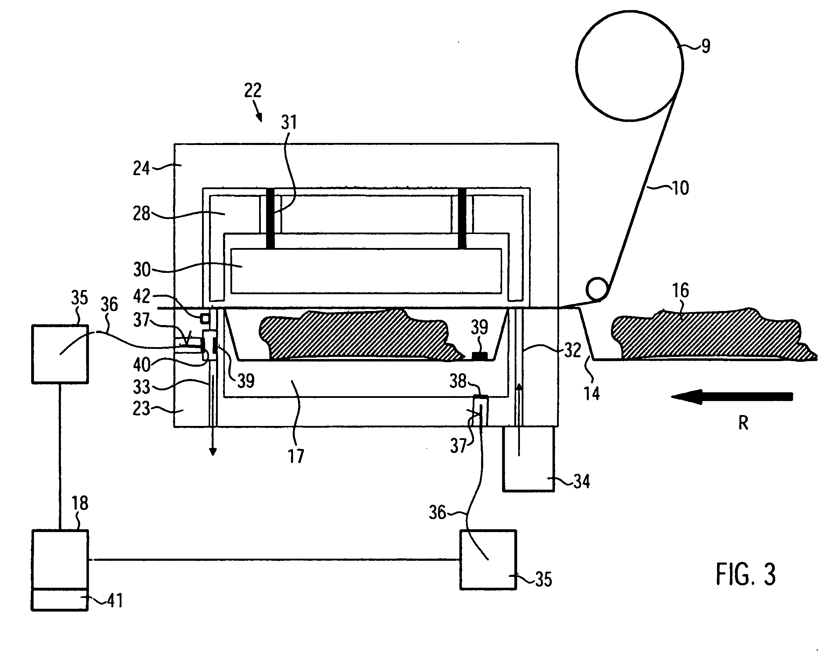

Figur 3 zeigt das in Figur 2 dargestellte Siegelwerkzeug 22 in einem Zustand, in dem Siegelwerkzeugunterteil 23 und Siegelwerkzeugoberteil 24 um einen Behälter 14 geschlossen worden sind, um eine geschlossene Kammer 17 zu bilden. In diesem Zustand sind der Rand 27 des Behälters 14 und die darüberliegende Deckelfolie 10 luftdicht festgeklemmt zwischen der Unterkante des Siegelwerkzeugoberteils 24 und dem Rand 26 des Siegelwerkzeugunterteils 23. Rings um den Behälter 14 ist die Kammer 17 luftdicht abgeschlossen.

In diesem Zustand, d. h. vor dem Ansiegeln der Deckelfolie 10 an den Behälter 14, erfolgt ein Begasen des Behälters 14. Zu diesem Zweck sind im Siegelwerkzeugunterteil 23 mehrere Gasleitungen vorgesehen, nämlich eine Gas-Zuleitung 32 und eine Gas-Ableitung 33. Die Gasleitungen 32, 33 gehören zu einer Evakuierungs- und Begasungseinrichtung 34, die in Figur 3 schematisch gezeigt ist. Die Evakuierungs- und Begasungseinrichtung 34 ist dazu eingerichtet, ein die Haltbarkeit des Produkts 16 verlängerndes Gas oder Gasgemisch (beispielsweise Sauerstoff oder CO₂) über die Gas-Zuleitung 32 in die Kammer 17 einzuleiten, sowie die Kammer 17 mittels der Gas-Ableitung 33 zu evakuieren. Das Evakuieren und das Begasen können nacheinander oder gleichzeitig stattfinden. Um sicherzustellen, dass die Gas-Zuleitung 32 und die Gas-Ableitung 33 mit dem Inneren des Behälters 14 in Verbindung stehen, sind Mittel vorgesehen (nicht dargestellt), die während des Evakuierens und/oder Begasens die Deckelfolie 10 von den Öffnungen der Gasleitungen 32, 33 abheben.

Am Siegelwerkzeug 22 verfügt die Verpackungsmaschine 1 über eine oder mehrere Messeinrichtungen 35 zum Bestimmen einer Konzentration des in die Kammer 17 geleiteten Gases oder Gasgemisches. Im Ausführungsbeispiel nach Figur 3 sind zwei Messeinrichtungen 35 vorgesehen. Jede von ihnen ist über einen Lichtleiter 36 mit einem Messkopf 37 verbunden. Die beiden Messköpfe 37 sind jeweils in der Wand des Siegelwerkzeugunterteils 23 platziert. Der eine Messkopf 37 ist durch ein Fenster 38 vom Inneren der Kammer 17 getrennt. Das Fenster 38 schützt den Messkopf 37, ist jedoch für die vom Messkopf 37 ausgesandte bzw. empfangene elektromagnetische Strahlung transparent. Das Fenster 38 ist ausreichend stark, um bei einem Evakuieren der Kammer 17 nicht beschädigt zu werden. Direkt in Sichtlinie des Messkopfs 37 befindet sich im Inneren der Kammer 17 bzw. hier sogar im Inneren des Behälters 14 ein Indikator 39. Der Indikator 39 wechselwirkt mit der vom Messkopf 37 ausgesendeten bzw. empfangenen elektromagnetischen Strahlung, bei der es sich insbesondere um Strahlung im sichtbaren Spektralbereich oder in einem dem Sichtbaren benachbarten Spektralbereich handeln kann, beispielsweise mit Wellenlängen zwischen 300 nm und 2 µm. Der Indikator 39 ist so eingerichtet, dass er seine Eigenschaften bei der Wechselwirkung mit der elektromagnetischen Strahlung in Abhängigkeit von der Konzentration des zu messenden Gases oder Gasgemisches verändert.

Der andere Messkopf 37 ist durch ein Fenster 40 von der Gas-Ableitung 33 getrennt. Dieses Fenster 40 ist ebenfalls transparent für die vom Messkopf 37 ausgesandte oder empfangene, elektromagnetische Strahlung, und es ist ebenfalls stabil genug, um durch das Begasen und/oder Evakuieren der Kammer 17 nicht beschädigt zu werden. Ein Indikator 39 ist in der Sichtlinie des Messkopfs 37 auf der dem Fenster 40 gegenüberliegenden Innenwand der Gas-Ableitung 33 angeordnet.

Der Betrieb des Siegelwerkzeugs 22 der Verpackungsmaschine 1 läuft wie folgt ab. Nach dem Einbringen eines Behälters 14, d. h. einer noch nicht verschlossenen Verpackung 21, in das Siegelwerkzeug 22 werden Siegelwerkzeugunterteil 23 und -oberteil 24 auf einander zu bewegt, bis sie sich zu einer Kammer 17 um die Verpackung 14 schließen. Durch geeignete Mittel wird dafür gesorgt, dass die Deckelfolie 10 vom Behälter 14 beabstandet bleibt, zumindest im Bereich der Öffnungen der Gasleitungen 32, 33 zur Kammer 17. Zunächst kann nun über die Gas-Ableitung 33 die Kammer 17 bzw. das Innere des Behälters 14 evakuiert werden. Anschließend schickt die Begasungseinrichtung 34 ein Austauschgas bzw. -gasgemisch über die Gas-Zuleitung 32 zum Behälter 14. Bei dem Austauschgas kann es sich beispielsweise um O₂ oder CO₂ handeln.

Kontinuierlich oder in regelmäßigen Abständen sorgt die Messeinrichtung 35 für ein Auslesen des Indikators 39. Zu diesem Zweck kann in der Messeinrichtung 35 ein Lichtimpuls erzeugt werden, beispielsweise mittels eines Lasers. Das Licht wird über den Lichtleiter 36 zum Messkopf 37 geführt und von dort über das Fenster 38, 39 auf den jeweiligen Indikator 39 gestrahlt. Der Indikator 39 absorbiert das Licht und wird dadurch zum Aussenden von Fluoreszenzstrahlung aktiviert. In Abhängigkeit von der Konzentration des Austauschgases ändern sich die Fluoreszenzeigenschaften des Indikators 39. Diese Fluoreszenzeigenschafien werden über den Messkopf 37 von der Messeinrichtung 35 ermittelt. Aus den Fluoreszenzeigenschaften kann die Messeinrichtung 35 auf die Konzentration des Gases zurückschließen. Für den optischen Bereich (aber nicht für andere Spektralbereiche) sind solche Indikatoren beispielsweise aus der WO 2007/093774 A1 bekannt.

Die Messeinrichtungen 35 können zu einem spektroskopischen Auslesen des Indikators 39 ausgebildet sein. Durch eine Spektralanalyse der vom Indikator 39 erhaltenen Strahlung kann die Messeinrichtung 35 beispielsweise eine Veränderung des Spektrums bei unterschiedlichen Wellenlängen feststellen, um daraus auf die Konzentration unterschiedlicher Gase zurückzuschließen.

Die Messeinrichtungen 35 übermitteln ihre Messdaten regelmäßig an die Steuerung 18 der Verpackungsmaschine 1. Die Steuerung 18 kann so eingerichtet sein, dass sie das Begasen beendet, sobald eine bestimmte Konzentration des Austauschgases erreicht wurde. An der Steuerung 18 kann auch ein Speicher 41 für die Messwerte vorgesehen sein. Dieser Speicher 41 ermöglicht das Speichern der mittels der Messeinrichtungen 35 gewonnenen Messdaten. Insbesondere dann, wenn jede Verpackung 14, 21 mit einem eigenen Indikator 39 versehen ist, erlaubt dies das Speichern eines Nachweises, dass beim Herstellen der Verpackung 21 eine bestimmte Atmosphäre in der Verpackung 21 geherrscht hat. Dies kann später für Produkthaftungsfragen relevant sein, insbesondere wenn es sich bei den Produkten 16 um gesundheitsrelevante Produkte wie pharmazeutische Produkte oder Medizintechnikprodukte handelt.

Denkbar ist es, dass an der Verpackungsmaschine 1, beispielsweise in Verbindung mit der Steuerung 18, eine Einrichtung zum Verändern und Einstellen des Spekträlbereichs bzw. der Wellenlänge vorgesehen ist, bei dem bzw. der das Auslesen des Indikators 39 erfolgt. Der Spektralbereich bzw. die Wellenlänge, bei denen die Messung stattfindet, können so auf einen für die jeweils herrschenden Prozessbedingungen (Druck, Temperatur) optimalen Wert zum Messen der Gaskonzentration eingestellt werden. Sie können auch verändert werden, um bei unterschiedlichen Spektralbereichen oder Wellenlängen die Konzentration unterschiedlicher Gase zu messen, wenn der Indikator 39 bei diesen unterschiedlichen Spektralbereichen/Wellenlängen unterschiedlich auf die verschiedenen Gase anspricht.

In der Verpackungsmaschine 1 kann darüber hinaus eine Reinigungsvorrichtung 42 für einen Indikator vorgesehen sein. Im Ausführungsbeispiel der Figur 3 liegt eine solche Reinigungsvorrichtung 42 in der Gas-Ableitung 33, und zwar in Strömungsrichtung kurz oberhalb des Indikators 39. Mittels der Reinigungsvorrichtung 42 kann beispielsweise ein Gas oder eine Flüssigkeit auf den Indikator 39 gerichtet werden, um Flüssigkeitsreste oder Verschmutzungen vom Indikator 39 herunterzuspülen. Diese Reinigung kann in einem sogenannten "clean-in-Place" -Verfahren (CIP) erfolgen.

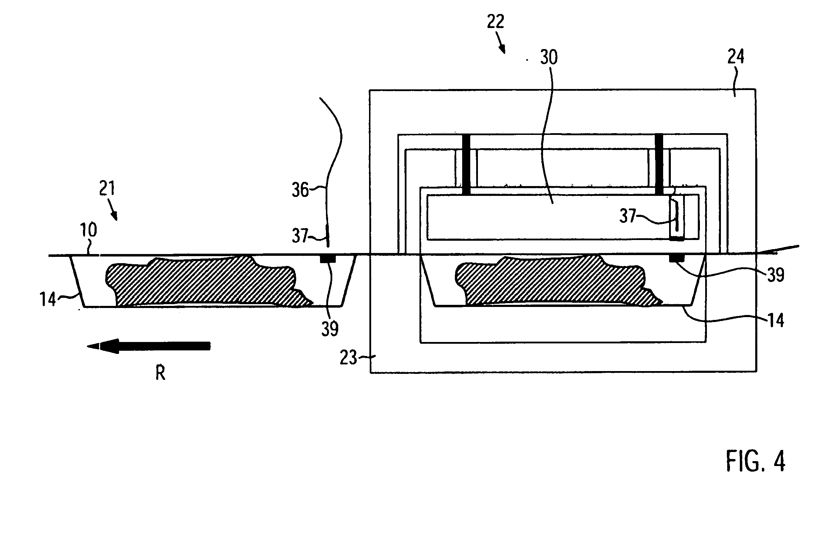

Figur 4 zeigt in schematischer. Form zwei weitere Ausführungsvarianten der erfindungsgemäßen Verpackungsmaschine 1. Bei beiden ist gemeinsam, dass die Verpackungsmaschine 1 über ein Mittel (nicht dargestellt) zum Anbringen eines Indikators 39 in einer Verpackung 14 aufweist, und zwar indem der Indikator 39 auf die dem Behälterteil 14 der Verpackung 21 zugewandten Seite der Verschlussfolie 10 angebracht wird.

In einer ersten Variante dieser Ausführungsform ist ein Messkopf 37 der Messeinrichtung 35 außerhalb des Siegelwerkzeugs 22 angeordnet, und zwar in Transportrichtung R hinter dem Siegelwerkzeug 22. Dieser Messkopf 37 ist so angeordnet, dass er auf den in einer darunter positionierten, mittels der Deckelfolie 10 verschlossenen Verpackung 21 vorgesehenen Indikator 39 ausgerichtet ist. Auf diese Weise kann exakt die nach dem Verschließen der Verpackung 21 in ihrem Inneren herrschende Gaskonzentration gemessen werden.

In einer anderen, rechts dargestellten Ausführungsvariante ist ein Messkopf 37 in der Produktschutzplatte 30 des Siegelwerkzeugs 22 angeordnet. Auch dieser Messkopf 37 ist so angeordnet, dass er auf einen darunter befindlichen Indikator 39 in einer Verpackung 21 ausgerichtet ist. An dieser Stelle kann der Messkopf 37 sowohl während des Begasens, als auch nach dem Versiegeln die Gaskonzentration in der Verpackung 21 messen.

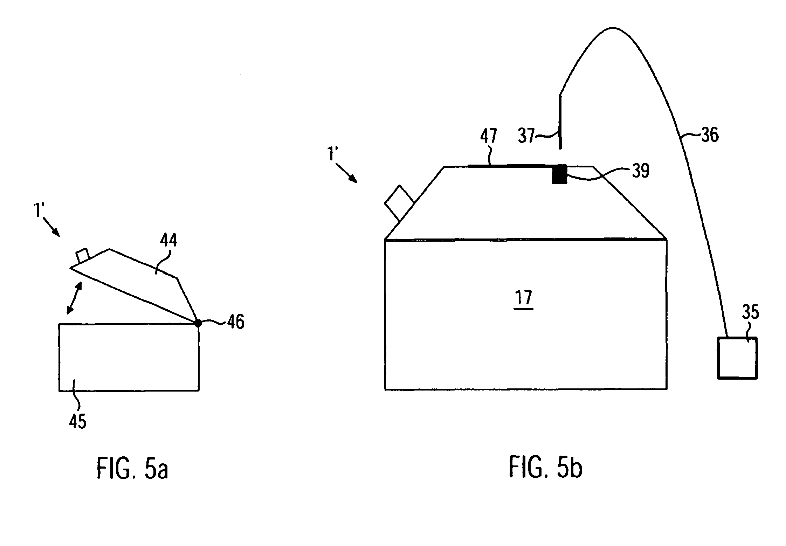

Die Figuren 5a, 5b zeigen in schematischer Ansicht einen anderen Typ einer erfindungsgemäßen Verpackungsmaschine 1', nämlich eine sogenannte Kammermaschine. In dieser Kammermaschine 1' sind ein Kammerunterteil 44 und ein Kammerdeckel 45 vorgesehen, die sich gemeinsam zu einer Kammer 17 um eine Verpackung 21 schließen können. Der Kammerdeckel 44 kann um ein Scharnier 46 relativ zum Kammerunterteil 45 verschwenkt werden, um die Kammer 17 zu öffnen. In Figur 5a ist der Kammerdeckel 44 in seiner geöffneten Stellung gezeigt.

Figur 5b zeigt die Kammer 17 in ihrer verschlossenen Stellung. Im Kammerdeckel 44 ist ein Sichtfenster 47 vorgesehen. Auf der Innenseite des Kammerdeckels 44 ist am Sichtfenster 47 ein Indikator 39 angebracht. Ein Messkopf 37 der Messeinrichtung 35 befindet sich außerhalb des Kammerdeckels 44, zumindest aber außerhalb des Innenraums der Kammer 17. Er dient zum Auslesen des Indikators 39 mittels elektromagnetischer Strahlung, für die das Sichtfenster 47 transparent ist.

Ausgehend von den dargestellten Ausführungsbeispielen können die erfindungsgemäßen Verpackungsmaschinen 1 auf vielfache Weise verändert werden. Bereits angedeutet wurde,
dass es sich bei der Verpackungsmaschine 1 um eine Tiefziehmaschine, eine Kammermaschine oder auch um eine Schalenverschließmaschine ("Traysealer") handeln kann. An der Verpackungsmaschine 1 können entweder ein Messkopf 37, oder aber auch mehrere Messköpfe 37 vorgesehen sein. Jeder Messkopf 37 kann einer eigenen Messeinrichtung 35 zugeordnet sein, oder es kann eine gemeinsame Messeinrichtung für alle vorhandenen Messköpfe 37 vorliegen. Das Auslesen des Indikators 39 muss nicht im sichtbaren Teil des elektromagnetischen Spektrums erfolgen. Vielmehr könnte das Auslesen auch in anderen Spektralbereichen erfolgen, beispielsweise mit UV-Strahlung, Infrarot-Strahlung, Terahertz-Strahlung, Mikrowellenstrahlung oder Funkwellen. Denkbar ist es auch, dass der Indikator 39 mehrere Felder, Zonen oder Bereiche aufweist, die jeweils die Konzentration eines bestimmten Gases oder Gasgemisches anzeigen. Zu diesem Zweck kann das Material auf jedem der Felder oder Bereiche geeignet gewählt sein, um besonders stark mit dem betreffenden Gas wechselzuwirken.

## Patentansprüche

1. Verpackungsmaschine (1) zum Herstellen von verschlossenen Verpackungen (21), wobei die Verpackungsmaschine (1) eine luftdicht um eine oder mehrere Verpackungen abschließbare Kammer (17), eine Begasungseinrichtung (34) zum Begasen der in der Kammer (17) befindlichen, mindestens einen Verpackung (21) mit einem Gas, mindestens eine in die Kammer (17) oder aus der Kammer (17) führende Gasleitung (32, 33) sowie eine Messeinrichtung (35) zum Bestimmen einer Konzentration des Gases aufweist,
**dadurch gekennzeichnet,**
**dass** die Messeinrichtung (35) einen Messkopf (37) zum Auslesen eines im Inneren der Kammer (17) oder im Inneren einer Gasleitung (32, 33) angeordneten Indikators (39) für die Konzentration des Gases mittels elektromagnetischer Strahlung aufweist und eine Vorrichtung (42) zum Reinigen des Indikators (39) vorgesehen ist.

2. Verpackungsmaschine nach Anspruch 1, **dadurch gekennzeichnet, dass** der Messkopf (37) zum optischen Auslesen des Indikators (39) ausgebildet ist.

3. Verpackungsmaschine nach einem der vorangehenden Ansprüche, **dadurch gekennzeichnet, dass** der Messkopf (37) in der Wand der Kammer (17) oder der Gasleitung (32, 33) angeordnet ist.

4. Verpackungsmaschine nach einem der Ansprüche 1 oder 2, **dadurch gekennzeichnet, dass** der Messkopf (37) außerhalb der Kammer (17) oder der Gasleitung (32, 33) angeordnet ist.

5. Verpackungsmaschine nach einem der vorangehenden Ansprüche, **dadurch gekennzeichnet, dass** die Messeinrichtung (35) zu einer optischen Anregung des Indikators (39) ausgebildet ist.

6. Verpackungsmaschine nach einem der vorangehenden Ansprüche, **dadurch gekennzeichnet, dass** der Messkopf (37) zum Messen der Reflektivität, der Transmissivität und/oder der Fluoreszenz des Indikators (39) in einem bestimmten Spektralbereich oder bei einer bestimmten Wellenlänge ausgebildet ist.

7. Verpackungsmaschine nach einem der vorangehenden Ansprüche, **dadurch gekennzeichnet, dass** eine Einrichtung zum Verändern und Einstellen des Spektralbereich bzw. der Wellenlänge vorgesehen ist.

8. Verpackungsmaschine nach einem der vorangehenden Ansprüche, **dadurch gekennzeichnet, dass** eine Steuerung (18) zum automatischen Betätigen der Reinigungsvorrichtung (42) vorgesehen ist.

9. Verpackungsmaschine nach einem der vorangehenden Ansprüche, **dadurch gekennzeichnet, dass** die Messeinrichtung (35) zum Bestimmen der jeweiligen Konzentration von zwei oder mehr unterschiedlichen Gasen oder Gasgemischen geeignet ist.

10. Verpackungsmaschine nach einem der vorangehenden Ansprüche, **dadurch gekennzeichnet, dass** ein Indikator (39) zwei oder mehr Bereiche aufweist, die jeweils zum Anzeigen der Konzentrationen eines bestimmten Gases oder Gasgemisches geeignet sind.

11. Verpackungsmaschine nach einem der vorangehenden Ansprüche, **dadurch gekennzeichnet, dass** die Messeinrichtung (35) zum spektroskopischen Auslesen eines Indikators (39) ausgebildet ist.

12. Verpackungsmaschine nach einem der vorangehenden Ansprüche, **dadurch gekennzeichnet, dass** die Verpackungsmaschine (1) ein Mittel zum Anbringen eines Indikators (39) in einer Verpackung (14, 21) aufweist.

13. Verpackungsmaschine nach Anspruch 12, **dadurch gekennzeichnet, dass** das Mittel zum Anbringen eines Indikators (39) dazu ausgebildet ist, einen Indikator (39) auf der einem Behälterteil (14) der Verpackung (21) zugewandten Seite einer Verschlussfolie (10) anzubringen.

## Claims

1. A packaging machine (1) for producing sealed packages (21), wherein the packaging machine (1) has a chamber (17) which can be closed in an airtight manner around one or more packages, a gassing device (34) for gassing the at least one package situated in the chamber (17) with a gas, at least one gas line (32,33) leading into the chamber (17) or out of the chamber (17), as well as a measuring device (35) for determining a concentration of the gas,
**characterised in that**
the measuring device (35) has a measuring head (37) for reading from an indicator (39) for the concentration of the gas by means of electromagnetic radiation, which indicator is arranged in the interior of the chamber (17) or in the interior of a gas line (32,33), and an apparatus (42) is provided for cleaning the indicator (39).

2. A packaging machine according to Claim 1, **characterised in that** the measuring head (37) is designed for the optical reading of the indicator (39).

3. A packaging machine according to any one of the preceding Claims 1, **characterised in that** the measuring head (37) is arranged in the wall of the chamber (17) or of the gas line (32,33).

4. A packaging machine according to either Claim 1 or Claim 2,
**characterised in that** the measuring head (37) is arranged outside the chamber (37) or the gas line (32,33).

5. A packaging machine according to any one of the preceding Claims, **characterised in that** the measuring device (35) is designed for optical excitation of the indicator (39).

6. A packaging machine according to any one of the preceding Claims, **characterised in that** the measuring head (37) is designed to measure the reflectivity, the transmissivity and/or the fluorescence of the indicator (39) in a given spectral range or at a given wavelength.

7. A packaging machine according to any one of the preceding Claims,
**characterised in that** a device is provided for varying and adjusting the spectral range or the wavelength.

8. A packaging machine according to any one of the preceding Claims,
**characterised in that** a control unit (18) is provided for automatically operating the cleaning device (42).

9. A packaging machine according to any one of the preceding Claims,
**characterised in that** the measuring device (35) is suitable for determining the respective concentration of two or more different gases or gas mixtures.

10. A packaging machine according to any one of the preceding Claims,
**characterised in that** an indicator(39) has two or more ranges which in each case are suitable for indicating the concentrations of a given gas or gas mixture.

11. A packaging machine according to any one of the preceding Claims, **characterised in that** the measuring device (35) is designed for the spectroscopic reading of an indicator (39).

12. A packaging machine according to any one of the preceding
**characterised in that** the packaging machine (1) has a means for attaching an indicator (39) in a packaging (14,21).

13. A packaging machine according to Claim 12, **characterised in that** the means for attaching an indicator (39) is designed to attach an indicator (39) on the side (14) of a sealing film (10) facing a container part (14) of the package (21).

## Revendications

1. Machine d'emballage (1) pour fabriquer des emballages scellés (21), étant précisé que la machine d'emballage (1) comporte une chambre (17) apte à être fermée de manière étanche à l'air autour d'un ou plusieurs emballages, un dispositif d'injection de gaz (34) pour injecter un gaz dans l'emballage ou les emballages (21) qui se trouvent dans la chambre (17), au moins une conduite de gaz (32, 33) qui arrive dans la chambre (17) ou qui sort de celle-ci, et un dispositif de mesure (35) pour définir une concentration du gaz,
**caractérisée en ce que** le dispositif de mesure (35) comporte une tête de mesure (37) pour lire un indicateur (39), disposé à l'intérieur de la chambre (17) ou à l'intérieur d'une conduite de gaz (32, 33), pour la concentration du gaz à l'aide d'un rayonnement électromagnétique, et il est prévu un dispositif (42) pour nettoyer l'indicateur (39).

2. Machine d'emballage selon la revendication 1, **caractérisée en ce que** la tête de mesure (37) est conçue pour une lecture optique de l'indicateur (39).

3. Machine d'emballage selon l'une des revendications précédentes, **caractérisée en ce que** la tête de mesure (37) est disposée dans la paroi de la chambre (17) ou de la conduite de gaz (32, 33).

4. Machine d'emballage selon l'une des revendications 1 ou 2, **caractérisée en ce que** la tête de mesure (37) est disposée à l'extérieur de la chambre (17) ou de la conduite de gaz (32, 33).

5. Machine d'emballage selon l'une des revendications précédentes, **caractérisée en ce que** le dispositif de mesure (35) est conçu pour une excitation optique de l'indicateur (39).

6. Machine d'emballage selon l'une des revendications précédentes, **caractérisée en ce que** la tête de mesure (37) est conçue pour mesurer la réflectivité, la transmissivité et/ou la fluorescence de l'indicateur (39) dans une zone spectrale définie ou pour une longueur d'onde définie.

7. Machine d'emballage selon l'une des revendications précédentes, **caractérisée en ce qu'**il est prévu un dispositif pour modifier et régler la zone spectrale ou la longueur d'onde.

8. Machine d'emballage selon l'une des revendications précédentes, **caractérisée en ce qu'**il est prévu une commande (18) pour l'actionnement automatique du dispositif de nettoyage (42).

9. Machine d'emballage selon l'une des revendications précédentes, **caractérisée en ce que** le dispositif de mesure (35) est apte à définir les concentrations respectives de deux gaz différents ou de deux mélanges gazeux différents, ou plus.

10. Machine d'emballage selon l'une des revendications précédentes, **caractérisée en ce qu'**un indicateur (39) comporte deux zones ou plus qui sont aptes à indiquer les concentrations d'un gaz ou mélange de gaz défini.

11. Machine d'emballage selon l'une des revendications précédentes, **caractérisée en ce que** le dispositif de mesure (35) est conçu pour une lecture spectroscopique d'un indicateur (39).

12. Machine d'emballage selon l'une des revendications précédentes, **caractérisée en ce que** la machine d'emballage (1) comporte un moyen pour installer un indicateur (39) dans un emballage (14, 21).

13. Machine d'emballage selon la revendication 12, **caractérisée en ce que** le moyen pour installer un indicateur (39) est conçu pour installer un indicateur (39) sur la face d'un film de scellage (10) tournée vers une partie formant récipient (14) de l'emballage (21).
